# EUROPÄISCHE PATENTSCHRIFT

(11) **EP 2 806 190 B1**
(45) Veröffentlichungstag und Bekanntmachung des Hinweises auf die Patenterteilung: **01.03.2017**
(21) Anmeldenummer: 14001176.8
(22) Anmeldetag: 29.03.2014
(51) Int. Cl.: F16J 15/00, B63H 23/32

(54) **Vorrichtung zum Abdichten einer Schiffspropellerwelle sowie Verfahren zur Herstellung einer derartigen Vorrichtung**
Device for sealing a ship propeller shaft and method for producing such a device
Dispositif d'étanchéification d'un arbre d'hélice de bateau et procédé de fabrication d'un tel dispositif

(30) Priorität: 22.05.2013 DE 102013008967
(43) Veröffentlichungstag der Anmeldung: 26.11.2014
(73) Patentinhaber: SKF Blohm + Voss Industries GmbH, 20457 Hamburg (DE)
(72) Erfinder: Rusch, Mathias, 21423 Winsen/Luhe (DE); Brand, Jörg, 22946 Trittau (DE); Wrage, Marko, 24643 Struvenhütten (DE); Böttcher, Nils, 24635 Daldorf (DE)
(74) Vertreter: Marschall, Stefan

(56) Entgegenhaltungen:
- EP-A1- 1 182 133
- DE-A1- 4 434 247
- US-A1- 2007 241 560
- US-B1- 7 025 126

## Beschreibung

Die Erfindung betrifft eine Vorrichtung zum Abdichten einer Schiffspropellerwelle zwischen Außenwasser und einem Schmiermittelraum nach dem Oberbegriff des Patentanspruchs 1 sowie ein Verfahren zur Herstellung einer derartigen Vorrichtung.

Eine Vorrichtung zum Abdichten einer Schiffspropellerwelle zwischen Außenwasser und einem Schmiermittelraum ist zum Beispiel in dem deutschen Patent DE 44 34 247 04 gezeigt.

Die Vorrichtung hat eine Mehrfachdichtung, die zwei zum Außenwasser gerichtete Dichtringe und zwei zum Schmiermittelraum der Schiffspropellerwelle gerichtete Dichtringe hat. Zwischen benachbarten Dichtringen ist eine Abdichtungskammer gebildet, in die über jeweils eine Mediumleitung ein Fluid einleitbar ist und aus der über jeweils eine Mediumleitung das Fluid abführbar ist.

Vom Schmiermittelraum in Richtung des Außenwassers betrachtet wird bei dieser bekannten Vorrichtung die vorderste bzw. erste Abdichtungskammer mit einem Öl, die zweite bzw. mittlere Abdichtungskammer mit Luft und die dritte bzw. hintere Abdichtungskammer mit Außenwasser beaufschlagt. Da die Mehrfachdichtung außerhalb des Schiffsrumpfes angeordnet ist, sind die Mediumleitungen je nach Ausführung des Schiffsantriebs abschnittsweise durch ein massives Gehäuse wie bspw. ein Stevenrohrabschnitt oder wie ein Gondelgehäuse geführt. Diese durch das Gehäuse geführten Leitungsabschnitte sind herkömmlicherweise Einzelbohrungen, die jeweils in einem technisch anspruchsvollen und zeitintensiven Bohrverfahren ausgebildet werden. Insbesondere dann, wenn die Mehrfachdichtung um weitere Abdichtungskammern bzw. Mediumleitungen erweitert werden soll, können die Bohrarbeiten zu einer längeren Liegezeit des Schiffes im Dock führen. Lange Liegezeiten sind jedoch aus Kostengründen unbedingt zu vermeiden.

Aufgabe der Erfindung ist es, eine Vorrichtung zum Abdichten einer Schiffspropellerwelle zwischen Außenwasser und einem Schmiermittelraum zu schaffen, die die vorgenannten Nachteile beseitigt und eine schnelle Bildung einer Mediumleitung einer Mehrfachdichtung ermöglicht. Des Weiteren ist es Aufgabe der Erfindung, ein Verfahren zur Herstellung einer derartigen Vorrichtung zu schaffen.

Diese Aufgabe wird gelöst durch eine Vorrichtung mit den Merkmalen des Patentanspruchs 1 und durch ein Verfahren mit den Merkmalen des Patentanspruchs 10.

Eine erfindungsgemäße Vorrichtung zum Abdichten einer Schiffspropellerwelle zwischen Außenwasser und einem Schmiermittelraum hat eine Mehrfachdichtung, die mindestens einen zum Außenwasser gerichteten Dichtring und mindestens einen zum Schmiermittelraum gerichteten Dichtring hat, wobei zwischen zwei benachbarten Dichtringen eine Abdichtungskammer gebildet ist, in die über zumindest jeweils eine Mediumleitung ein Fluid einleitbar ist und aus der über zumindest jeweils eine Mediumleitung das Fluid abführbar ist. Erfindungsgemäß sind zumindest zwei Mediumleitungen abschnittsweise ineinander geführt, wobei die eine Mediumleitung einen als Bohrung ausgeführten Leitungsabschnitt und die andere Mediumleitung einen als Rohr ausgeführten Leitungsabschnitt hat, der in der Bohrung verläuft.

Das abschnittsweise Ineinanderführen der Fludleitungen hat insbesondere bei massiven Gehäusen den Vorteil, dass beispielsweise bei Erweiterung der Mehrfachdichtung um eine weitere Mediumleitungen keine neue zeitintensive und technisch anspruchsvolle Gehäusebohrung ausgebildet werden muss. Das Einsetzen des Rohres in eine bestehende Gehäusebohrung ist im Vergleich zum Ausbilden einer zusätzlichen Gehäusebohrung technisch einfach und schnell möglich. Wenn erforderlich, ist lediglich die bestehende und das Rohr aufnehmende Gehäusebohrung zur Einhaltung bestimmter Durchflussmengen über den verbleibenden Strömungsquerschnitt der Gehäusebohrung aufzubahren.

Bevorzugterweise ist das Rohr mittig in der Bohrung angeordnet. Hierdurch wird eine koaxiale Anordnung geschaffen, wodurch ein ringartiger und insbesondere achssymmetrischer Strömungsquerschnitt der Bohrung ausgebildet wird. Hierdurch wird eine vergleichmäßigte Fluidströmung durch die Bohrung geschaffen, da Turbulenzen in der durch die Bohrung strömenden Fluidströmung verhindert werden.
Die Fluidströmung in der Bohrung lässt sich weiter vergleichmäßigen, wenn das Rohr innerhalb der Bohrung frei von Rohrstützen ist, da hierdurch Turbulenzen im Bereich von Rohrstützen innerhalb der Bohrung verhindert werden. Hierzu kann das Rohr beispielsweise die Bohrung durchsetzen und endseitig außerhalb der Bohrung abgestützt sein.

Bei einem Ausführungsbeispiel sind die die Bohrung aufweisende Mediumleitung und die das Rohr aufweisende Mediumleitung entweder als Gasleitung oder als Flüssigkeitsleitung ausgebildet.

Bei einem alternativen Ausführungsbeispiel ist die die Bohrung aufweisende Mediumleitung eine Gasleitung und die das Rohr aufweisende Mediumleitung eine Flüssigkeitsleitung.

Bei einem weiteren Ausführungsbeispiel ist die die Bohrung aufweisende Mediumleitung eine Flüssigkeitsleitung und die das Rohr aufweisende Mediumleitung eine Gasleitung.

Wenn die Mehrfachdichtung insbesondere nachträglich um mehrere Mediumleitungen ergänzt werden soll, können in der Bohrung mehrere Mediumleitungen abschnittsweise geführt sein. Hierdurch wird der technische und zeitliche Aufwand zum Ausbilden der zusätzlichen Mediumleitungen gering gehalten. Eventuell ist lediglich die bestehende und die Rohre aufnehmende Gehäusebohrung zur Einhaltung bestimmter Durchflussmengen aufzubahren.

Bei einem Ausführungsbeispiel sind die Rohre ineinander und mittig in der Bohrung geführt. Die Rohre sind somit zueinander und zur Bohrung koaxial angeordnet, wodurch Turbulenzen und somit Strömungsverluste in der jeweiligen ringförmigen Fluidströmung verhindert werden bzw. zumindest stark reduziert werden.
Bei einem alternativen Ausführungsbeispiel sind die Rohre nebeneinander in der Bohrung angeordnet. Hierdurch lässt sich der Montageaufwand der Rohre gegenüber der vorgenannten koaxialen Anordnung reduzieren.

Bei einem bevorzugten Verfahren zur Herstellung einer erfindungsgemäßen Vorrichtung wird in eine Gehäusebohrung einer ersten Mediumleitung der Vorrichtung zumindest ein Rohr einer zweiten Mediumleitung der Vorrichtung eingesetzt. Durch das Einsetzen des Rohres in die bestehende Gehäusebohrung lässt sich die Mehrfachdichtung der Vorrichtung technisch einfach und schnell um zumindest eine weitere Mediumleitungen ergänzen.

Um zu gewährleisten, dass nach dem Einsetzen des Rohres durch die Gehäusebohrung eine ausreichende Fluidmenge geführt werden kann, kann die Gehäusebohrung vor dem Einsetzen des Rohres aufgebohrt werden.

Sonstige vorteilhafte Ausführungsbeispiele der Erfindung sind Gegenstand weiterer Unteransprüche.

Im Folgenden wird ein bevorzugtes Ausführungsbeispiel der Erfindung anhand stark vereinfachter schematischer Darstellungen näher erläutert. Es zeigen:

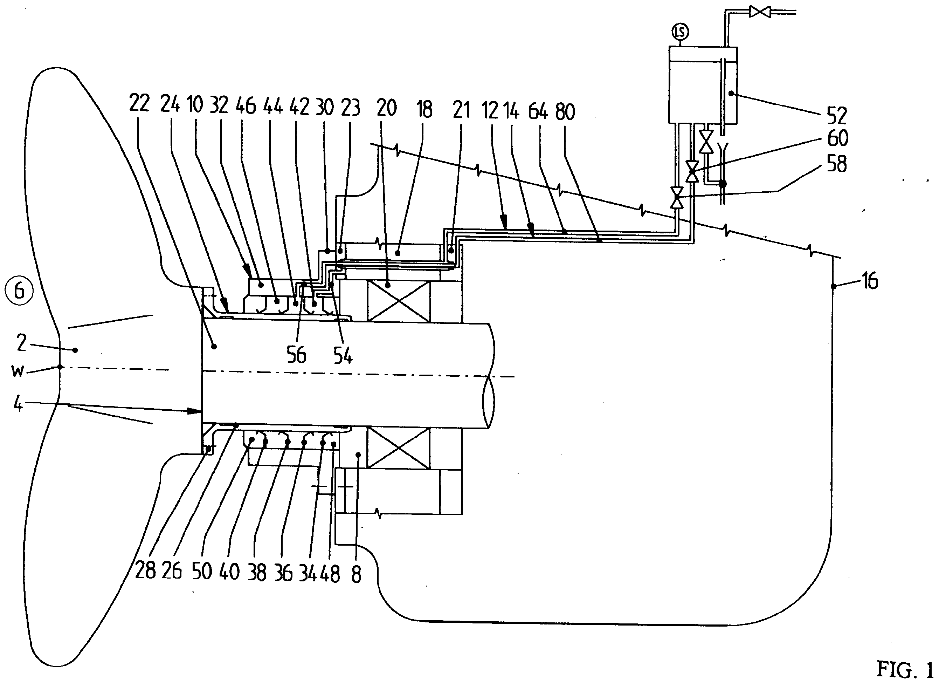

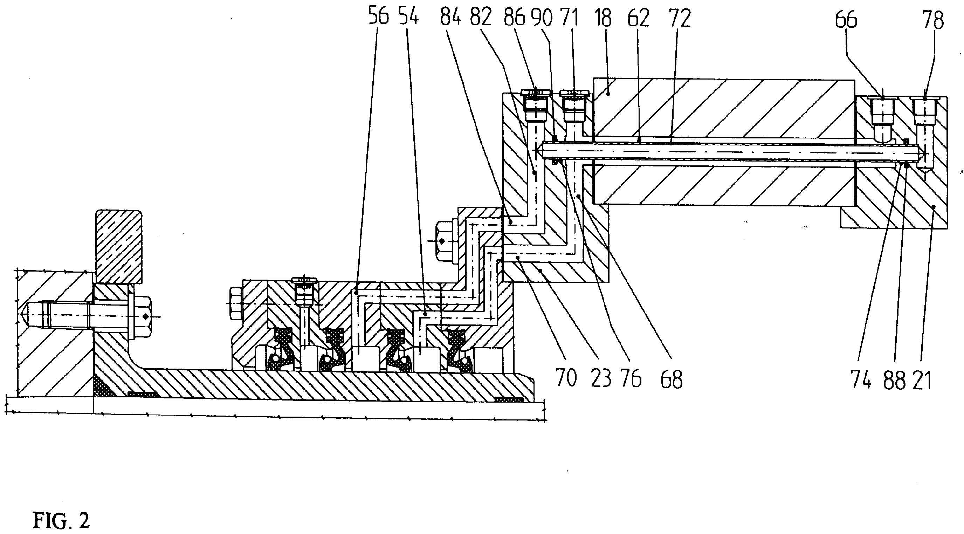

Figur 1 einen Längsschnitt durch einen Bereich einer Vorrichtung, und Figur 2 eine Detaildarstellung gemäß Figur 1 zur prinzipiellen Erläuterung mit Leitungen in unterschiedlichen Schnittebenen.

Gemäß der Darstellung in Figur 1 hat eine beispielhafte erfindungsgemäße Vorrichtung 1 zum Abdichten einer einen Schiffspropeller 2 aufnehmenden Schiffspropellerwelle 4 zwischen Außenwasser 6 und einem schiffspropellerwellenseitigen Schmiermittelraum 8 eine Mehrfachdichtung 10 und eine Vielzahl von Mediumleitungen 12, 14 zum Zuführen und Abführen einer Vielzahl von Dichtfluiden zur Mehrfachdichtung 10. In dem gezeigten Ausführungsbeispiel durchsetzt die Schiffspropellerwelle 4 in Stevenrohrbauweise einen Schiffsrumpf 16. Selbstverständlich kann die Schiffspropellerwelle 4 und somit die Vorrichtung 1 auch bei Gondelgehäusen bzw. Podantrieben, bei Querstrahlrudern bzw. Thrustern und dergleichen eingesetzt werden.

Die Schiffspropellerwelle 4 ist durch ein drehfestes massives Gehäuse 18 im Innern des Schiffsrumpfes 16 geführt, das den Schmiermittelraum 8 radial außen begrenzt und in dem die Schiffspropellerwelle 4 mittels einer Lagerung 20 radial abgestützt ist.

Das Gehäuse 18 ist zylinderförmig und an seinen voneinander abgewandten Stirnflächen mit jeweils einem angeschraubten Ringadapter 21, 23 versehen. Die Ringadapter 21, 23 dienen im Vorgriff auf Figur 2 zum stirnseitig Verschließen einer in dem Gehäuse 18 ausgebildeten axialen Bohrung 62 der Mediumleitungen 12 sowie eines in die Bohrung 62 eingesetzten Rohres 72 bzw. Rohraufnahmen 74, 76 der Mediumleitung 14. Zudem dienen die Ringadapter 21, 23 zum schiffsrumpfseitigen Anschluss von nicht gezeigten weiteren Schmierraumbegrenzungen bzw. zum außenwasserseitigen Anschluss der Mehrfachdichtung 10.

Auf einem aus dem Schiffsrumpf 16 geführten und somit aus dem Gehäuse 18 außenwasserseitig hervorstehenden Wellenabschnitt 22 der Schiffspropellerwelle 4 ist eine Laufbuchse 24 angeordnet. Die Laufbuchse 24 hat einen Zylinderabschnitt 26, mittels dem sie an dem Wellenabschnitt 22 geführt ist und einen Ringflansch 28 zum Anschrauben an den Schiffspropeller 2.

Die Mehrfachdichtung 10 ist außerhalb des Schiffsrumpfs 16 angeordnet. Sie weist einen Ringflansch 30, mittels dem sie drehfest an dem propellerseitigen Ringadapter 23 befestigt ist und einen wie in Figur 2 zu erkennen mehrteiligen Zylinderabschnitt 32 auf, mittels dem sie den Zylinderabschnitt 26 der Laufbuchse 24 umgreift.

In der Mehrfachdichtung 10 sind eine Vielzahl von Dichtringen 34, 36, 38, 40 angeordnet, zwischen denen jeweils eine Abdichtungskammer 42, 44, 46 angeordnet ist. In dem gezeigten Ausführungsbeispiel sind vier Dichtringe 34, 36, 38, 40 vorgesehen, von denen von dem Gehäuse 18 in Richtung des Schiffspropellers 2 betrachtet der erste bzw. vordere Dichtring 34 und der zweite bzw. mittlere vordere Dichtring 36 dem Schmiermittelraum 8 zugewandt sind und der dritte bzw. der mittlere hintere Dichtring 38 sowie der vierte bzw. hintere Dichtring 40 dem Außenwasser 6 zugewandt sind. Somit sind der erste und der zweite Dichtring 34, 36 zum dritten und zum vierten Dichtrung 38, 40 zueinander entgegengesetzt orientiert, wobei sich die beiden mittleren Dichtringe 36, 38 rückseitig unmittelbar gegenüberliegen.

Von dem Gehäuse 18 in Richtung des Schiffspropellers 2 betrachtet ist erste bzw. vordere Abdichtungskammer 42 zwischen dem vorderen Dichtring 34 und dem mittleren vorderen Dichtring 36 ausgebildet. Die zweite bzw. mittlere Abdichtungskammer 44 ist zwischen den mittleren Dichtringen 36, 38 ausgebildet. Die dritte bzw. hintere Abdichtungskammer 46 ist zwischen dem mittleren hinteren Dichtring 38 und dem hinteren Dichtring 40 ausgebildet.

Der vorderen Abdichtungskammer 42 ist ein Ringraum 48 axial vorgelagert, der zum Schmiermittelraum 16 stirnseitig geöffnet ist und durch den vorderen Dichtring 34 von der vorderen Abdichtungskammer 42 getrennt ist. Der hinteren Abdichtungskammer 46 ist ein Ringraum 50 axial nachgelagert, der über einen stirnseitigen Ringspalt zum Außenwasser 6 geöffnet ist und durch den hinteren Dichtring 40 von der hinteren Abdichtungskammer 46 getrennt ist.

Den Abdichtungskammern 42, 44 ist eine zulaufseitige Mediumleitung 12, 14 und eine ablaufseitige Mediumleitung zugeordnet. Die sich von den Abdichtungskammern 42, 44 erstreckenden nicht gezeigten ablaufseitige Mediumleitungen verlaufen durch einen unteren Umfangsbereich der Mehrfachdichtung 10 und des Gehäuses 18. Selbstverständlich können alle bzw. einzelne der zulaufseitigen Mediumleitungen 12, 14 an einem unteren Umfangsbereich und alle bzw. einzelne ablaufseitigen Mediumleitungen an einem oberen Umfangsbereich der Mehrfachdichtung 10 angeordnet sein. Grundsätzlich ermöglichen die ablaufseitigen Mediumleitungen die Führung des jeweiligen Dichtfluids bzw. Fluids in einem Kreislauf, so dass ein aus einem Tank 52 entnommenes Fluid nach einer entsprechenden Aufbereitung wie zum Beispiel der Entfernung von in der jeweiligen Abdichtungskammer 42, 44 aufgenommenen Schmutzpartikeln bzw. Verunreinigungen dem Tank 52 wieder zugeführt wird.

Die zulaufseitigen Mediumleitungen 12, 14 erstrecken sich vom dem Tank 52 und sind durch das Gehäuse 18 in die Mehrfachdichtung 10 geführt, wobei sie den Ringflansch 30 und den Zylinderabschnitt 32 als Winkelbohrungssystem 54, 56 durchsetzten und in die vordere Abdichtungskammer 42 bzw. die mittlere Abdichtungskammer 44 münden. Da die Mediumleitungen 12, 14 einem gemeinsamen Tank 52 zugeordnet sind, werden die vordere Abdichtungskammer 42 und die mittlere Abdichtungskammer 44 in dem hier gezeigten Ausführungsbeispiel mit dem gleichen Fluid beaufschlagt bzw. gespült. Beispielsweise ist das Fluid eine Flüssigkeit und insbesondere ein öl. Die Mediumleitungen 12, 14 sind somit Flüssigkeitsleitungen. Zum Auf- und Zusteuern der Mediumleitungen 12, 14 ist in jeder Mediumleitung 12, 14 eine Ventileinrichtung 58, 60 angeordnet.

Wie in der Detaildarstellung nach Figur 2 beziffert, hat die zulaufseitige Mediumleitung 12 der vorderen Abdichtungskammer 42 zum axialen Durchsetzen des Gehäuses 18 einen als Bohrung 62 ausgebildeten Leitungsabschnitt.
Die Bohrung 62 erstreckt sich bezogen auf eine in Figur 1 gezeigte Drehachse W der Schiffspropellerwelle 4 axial durch das Gehäuse 18. Die Bohrung 62 tritt jeweils in die Ringadapter 21, 23 ein ohne diese zu durchsetzen. Die Bohrung 62 wird somit durch die Ringadapter 21, 23 endseitig verschlossen. Zur Fluidverbindung der Bohrung 62 mit einem in Figur 1 gezeigten tankseitigen Leitungsabschnitt 64 der Mediumleitung 12 ist in dem tankseitigen Ringadapter 21 eine Radialanschlussbohrung 66 eingebracht, die radial in die Bohrung 62 mündet. Zur Fluidverbindung der Bohrung 62 mit dem Winkelbohrungssystem 54 in der Mehrfachdichtung 10 ist in dem mehrfachdichtungsseitigen Ringadapter 23 eine Radialbohrung 68 eingebracht, die sich von der Bohrung 62 radial nach innen erstreckt und die in eine in den Ringadapter 23 eingebrachte Axialbohrung 70 mündet. Die Axialbohrung 70 tritt einseitig stirnseitig aus dem Ringadapter 23 aus und ist dichtend mit dem Winkelbohrungssystem 54 verbunden. Die Radialbohrung 68 ist an ihrem radial äußeren Endabschnitt mit einem Verschlusselement bzw. Stutzen 71 verschlossen.

Die zulaufseitige Mediumleitung 14 der mittleren Abdichtungskammer 42 hat, wie in Figur 2 gezeigt, zum axialen Durchsetzen des Gehäuses 18 einen als Rohr 72 ausgebildeten Leitungsabschnitt. Das Rohr 72 ist axiale Länge. Vorzugsweise sind das Rohr 70 und die Bohrung 62 koaxial zueinander angeordnet.

Um zu verhindern, dass der gesamte Srömungsquerschnitt der Bohrung 62 durch das Rohr 72 verschlossen wird, hat das Rohr 72 einen Außendurchmesser, der kleiner als ein Bohrungsinnendurchmesser ist. Zur Gewährleistung einer geforderten Durchflussmenge durch die Bohrung 62 bei eingesetztem Rohr 72 kann es erforderlich sein, die Bohrung 62 vor dem Einsetzen des Rohres 72 aufzubahren.

Das Rohr 72 erstreckt sich endseitig über die Bohrung 62 hinaus und endet in jeweils einer in den Ringadaptern 21, 23 ausgebildeten Rohraufnahme 74, 76. Somit ist das Rohr 72 innerhalb der Bohrung 62 frei von Rohrstützen und in diesem somit nicht abgestützt. Die Rohraufnahmen 74, 76 sind in den Ringadaptern 21, 23 als Durchgangsbohrungen ausgeführt, die sich jeweils stirnseitig von der Bohrung 62 erstrecken. Die in dem tankseitigen Ringadapter 21 ausgebildete Rohraufnahme bzw. Durchgangsbohrung 74 mündet in eine Radialanschlussbohrung 78 zur Fluidverbindung des Rohrs 72 mit einem in Figur 1 gezeigten tankseitigen Leitungsabschnitt 80 der Mediumleitung 14. Die in dem mehrfachdichtungsseitigen Ringadapter 23 ausgebildete Rohraufnahme bzw. Durchgangsbohrung 72 mündet in eine ringadapterseitige Radialbohrung 82, die in eine in den Ringadapter 23 eingebrachte Längsbohrung 84 mündet, die einseitig stirnseitig aus dem Ringadapter 23 austritt und dichtend mit dem Winkelbohrungssystem 56 in der Mehrfachdichtung 10 verbunden ist. Um einen Fluidaustritt aus der Radialbohrung 82 zu verhindern, ist diese an ihrem radial äußeren Endabschnitt mittels eines Verschlusselements 86 fluiddicht verschlossen.

Um zu verhindern, dass durch die Rohraufnahmen 74, 76 ein Fluidaustausch zwischen der Mediumleitung 12 und der Mediumleitung 14 erfolgt, ist das Rohr 72 in den Rohraufnahmen 74, 76 durch es umgreifende Ringdichtungen 88, 90 fluiddicht aufgenommen, die in nicht bezifferte Ringnuten der Ringadapter 21, 23 eingesetzt sind.

Es sei daraufhin gewiesen, dass, auch wenn in den Figuren 1 und 2 anders dargestellt, die Mediumleitungen 12, 14 in dem mehrfachdichtungsseitigen Ringadapter 23 aus fertigungstechnischen Gründen in Umfangsrichtung versetzt zueinander angeordnet sind. Die Radialbohrung 68 und die Axialbohrung 70 der Mediumleitung 12 zur vorderen Abdichtungskammer 42 sind also nicht wie dargestellt in der gleichen Schnittebene wie die Radialbohrung 82 und die Längsbohrung 84 der Mediumleitung 14 zur mittleren Abdichtungskammer 44 positioniert.

Die Erfindung eignet sich insbesondere zum technisch einfachen und schnellen Erweitern bzw. Nachrüsten einer Mehrfachdichtung 10 einer bestehenden Vorrichtung zum Abdichten einer Schiffspropellerwelle um zumindest eine zusätzliche Mediumleitung. Mittels eines in eine bestehende Gehäusebohrung 62 einer existierenden Mediumleitung 12 eingeschobenen Rohres 72 als Abschnitt der zusätzlichen Mediumleitung 14 wird das Gehäuse 18 mit einer großen axialen Erstreckung bezogen auf die Ringadapter 21, 23 zum Beispiel bequem überbrückt, ohne dass hierfür eine zusätzliche Bohrung in das Gehäuse 18 eingebracht werden muss.

Offenbart ist eine Vorrichtung zum Abdichten einer Schiffspropellerwelle zwischen Außenwasser und einem Schmiermittelraum mit einer Mehrfachdichtung, wobei eine Mediumleitung abschnittsweise als eine Gehäusebohrung ausgebildet ist und zumindest ein Leitungsabschnitt einer anderen Mediumleitung als Rohr durch die Gehäusebohrung geführt ist, sowie ein Verfahren zur Herstellung einer derartigen Vorrichtung.

## Patentansprüche

1. Vorrichtung (1) zum Abdichten einer Schiffspropellerwelle (4) zwischen Außenwasser (6) und einem Schmiermittelraum (8) mit einer Mehrfachdichtung (10), die mindestens einen zum Außenwasser (6) gerichteten Dichtring (38, 40) und mindestens einen zum Schmiermittelraum (8) gerichteten Dichtring (34, 36) hat, wobei zwischen jeweils zwei benachbarten Dichtringen (34, 36, 38, 40) eine Abdichtungskammer (42, 44, 46) gebildet ist, in die über zumindest jeweils eine Mediumleitung (12, 14) ein Fluid einleitbar ist und aus der über zumindest jeweils eine Mediumleitung (12, 14) das Fluid abführbar ist, **dadurch gekennzeichnet, dass** zumindest zwei Mediumleitungen (12, 14) abschnittsweise ineinander geführt sind, wobei die eine Mediumleitung (12) einen als Bohrung (62) ausgeführten Leitungsabschnitt und die andere Mediumleitung (14) einen als Rohr (72) ausgeführten Leitungsabschnitt hat, der in der Bohrung (62) verläuft.

2. Vorrichtung nach Anspruch 1, wobei das Rohr (72) mittig in der Bohrung (62) verläuft.

3. Vorrichtung nach Anspruch 1 oder 2, wobei das Rohr (72) innerhalb der Bohrung (62) frei von Rohrstützen ist.

4. Vorrichtung nach Anspruch 1, 2 oder 3, wobei die die Bohrung (62) aufweisende Mediumleitung und die das Rohr (72) aufweisende Mediumleitung (14) entweder als Gasleitung oder als Flüssigkeitsleitung ausgebildet sind.

5. Vorrichtung nach Anspruch 1, 2 oder 3, wobei die die Bohrung (62) aufweisende Mediumleitung (12) eine Gasleitung und die das Rohr (72) aufweisende Mediumleitung (14) eine Flüssigkeitsleitung ist.

6. Vorrichtung nach Anspruch 1, 2 oder 3, wobei die die Bohrung (62) aufweisende Mediumleitung (12) eine Flüssigkeitsleitung und die das Rohr (72) aufweisende Mediumleitung (14) eine Gasleitung ist.

7. Vorrichtung nach einem der vorhergehenden Ansprüche, wobei mehrere Mediumleitungen (14) als Leitungsabschnitte ausgebildete Rohre (72) aufweisen, die in der Bohrung (62) geführt sind.

8. Vorrichtung nach Anspruch 7, wobei die Rohre (72) ineinander und mittig in der Bohrung (62) geführt sind.

9. Vorrichtung nach Anspruch 7 oder 8, wobei die Rohre (72) nebeneinander in der Bohrung (62) geführt sind.

10. Verfahren zur Herstellung einer Vorrichtung nach einem der vorhergehenden Ansprüche , wobei in eine
Gehäusebohrung (62) einer ersten Mediumleitung (12) der Vorrichtung zumindest ein Rohr (72) einer zweiten Mediumleitung (14) der Vorrichtung eingesetzt wird.

11. Verfahren nach Anspruch 10, wobei die Gehäusebohrung (62) vor dem Einsetzen des Rohrs (72) aufgebohrt wird.

## Claims

1. A device (1) for sealing a ship propeller shaft (4) between outside water (6) and a lubricant space (8) using a multiple seal (10), which has at least one sealing ring (38, 40) directed towards the outside water (6) and at least one sealing ring (34, 36) directed towards the lubricant space (8), a sealing chamber (42, 44, 46) being formed between two adjacent sealing rings (34, 36, 38, 40) in each case, into which sealing chamber a fluid can be introduced by means of at least one medium line (12, 14) in each case and out of which sealing chamber the fluid can be discharged by means of at least one medium line (12, 14) in each case, **characterized in that** at least two medium lines (12, 14) are guided in one another in sections, wherein the one medium line (12) has a line section realized as a bore (62) and the other medium line (14) has a line section realized as a pipe (72), which runs in the bore (62).

2. The device according to claim 1, wherein the pipe (72) runs centrally in the bore (62).

3. The device according to claim 1 or 2, wherein the pipe (72) is free from pipe supports inside the bore (62).

4. The device according to claim 1, 2 or 3, wherein the medium line having the bore (62) and the medium line (14) having the pipe (72) are constructed either as a gas line or as a liquid line.

5. The device according to claim 1, 2 or 3, wherein the medium line (12) having the bore (62) is a gas line and the medium line (14) having the pipe (72) is a liquid line.

6. The device according to claim 1, 2 or 3, wherein the medium line (12) having the bore (62) is a liquid line and the medium line (14) having the pipe (72) is a gas line.

7. The device according to one of the preceding claims, wherein a plurality of medium lines (14) have pipes (72) constructed as line sections, which are guided in the bore (62).

8. The device according to claim 7, wherein the pipes (72) are guided in one another and centrally in the bore (62).

9. The device according to claim 7 or 8, wherein the pipes (72) are guided next to one another in the bore (62).

10. A method for producing a device according to one of the preceding claims, wherein at least one pipe (72) of a second medium line (14) of the device is inserted into a housing bore (62) of a first medium line (12) of the device.

11. The method according to claim 10, wherein the housing bore (62) is drilled out before the insertion of the pipe (72).

## Revendications

1. Dispositif (1) pour étanchéifier un arbre porte-hélice de bateau (4) entre l'eau extérieure (6) et un compartiment de lubrifiant (8) avec une étanchéification multiple (10), qui possède au moins une bague d'étanchéité (38, 40) orientée vers l'eau extérieure (6) et au moins une bague d'étanchéité (34, 36) orientée vers le compartiment de lubrifiant (8), une chambre d'étanchéification (42, 44, 46) étant formée entre respectivement deux bagues d'étanchéité voisines (34, 36, 38, 40) dans laquelle un fluide peut être introduit à travers au moins respectivement un conduit de milieu (12, 14) et à partir de laquelle le fluide peut être évacué au moins respectivement par un conduit de milieu (12, 14), **caractérisé en ce qu'au** moins deux conduits de milieu (12, 14) sont guidés l'un dans l'autre par tronçon, un conduit de milieu (12) possédant une section de conduit exécutée comme un alésage (62) et l'autre conduit de milieu (14) une section de conduit exécutée comme un tube (72), qui passe dans l'alésage (62).

2. Dispositif selon la revendication 1, le tube (72) passant au centre dans l'alésage (62).

3. Dispositif selon la revendication 1 ou 2, le tube (72) étant exempt de supports de tube à l'intérieur de l'alésage (62).

4. Dispositif selon la revendication 1, 2 ou 3, le conduit de milieu comportant l'alésage (62) et le conduit de milieu (14) comportant le tube (72) étant constitués soit comme un conduit de gaz ou comme un conduit de liquide.

5. Dispositif selon la revendication 1, 2 ou 3, le conduit de milieu comportant l'alésage (12) étant un conduit de gaz et le conduit de milieu (14) comportant le tube (72), un conduit de liquide.

6. Dispositif selon la revendication 1, 2 ou 3, le conduit de milieu (12) comportant l'alésage (62) étant un conduit de liquide et le conduit de milieu (14) comportant le tube (72) étant un conduit de gaz.

7. Dispositif selon l'une quelconque des revendications précédentes, plusieurs conduits de milieu (14) comportant des tubes (72) constitués comme tronçons de conduit, qui sont guidés dans l'alésage (62).

8. Dispositif selon la revendication 7, les tubes (72) étant guidés l'un dans l'autre et de manière centrale dans l'alésage (62).

9. Dispositif selon la revendication 7 ou 8, les tubes (72) étant guidés l'un à côté de l'autre dans l'alésage (62).

10. Procédé destiné à la fabrication d'un dispositif selon l'une quelconque des revendications précédentes, au moins un tube (72) d'un deuxième conduit de milieu (14) du dispositif étant inséré dans un alésage de carter (62) d'un premier conduit de milieu (12) du dispositif.

11. Procédé selon la revendication 10, l'alésage de carter (62) étant alésé avant l'insertion du tube (72).
